# EUROPÄISCHE PATENTSCHRIFT

(11) **EP 0 956 182 B1**
(45) Veröffentlichungstag und Bekanntmachung des Hinweises auf die Patenterteilung: **03.07.2002**
(21) Anmeldenummer: 98907957.9
(22) Anmeldetag: 21.01.1998
(51) Int. Cl.: B24D 3/06, B24B 3/34, B24B 33/08

(54) **HONSCHLEIFWERKZEUG ZUR SPANABHEBENDEN BEARBEITUNG VON WERKSTÜCKEN**
HONING TOOL FOR MACHINING WORKPIECES BY CUTTING
OUTIL DE HONING POUR L'USINAGE DE PIECES PAR ENLEVEMENT DE COPEAUX

(30) Priorität: 30.01.1997 DE 19703261
(43) Veröffentlichungstag der Anmeldung: 17.11.1999
(73) Patentinhaber: Deutsches Zentrum für Luft- und Raumfahrt e.V., 53175 Bonn (DE)
(72) Erfinder: KRENKEL, Walter, D-71272 Renningen (DE); KOCHENDÖRFER, Richard, D-70619 Stuttgart (DE); HEINRICH, Horst, D-58809 Neuenrade (DE)
(74) Vertreter: Grimm, Ekkehard, Dipl.-Phys.
(86) Internationale Anmeldenummer: EP9800269
(87) Internationale Veröffentlichungsnummer: WO9833624

(56) Entgegenhaltungen:
- EP-A- 0 692 342
- US-A- 4 353 953
- US-A- 4 504 284
- PATENT ABSTRACTS OF JAPAN vol. 018, no. 354 (M-1632), 5.Juli 1994 & JP 06 091541 A (OSAKA DIAMOND IND CO LTD;OTHERS: 01), 5.April 1994,

## Beschreibung

Die vorliegende Erfindung betrifft ein Honschleifwerkzeug zur spanabhebenden Bearbeitung, wie, zum Schleifen, Polieren oder Honen, von Werkstücken, insbesondere zur Bearbeitung von Werkstücken aus Metall, das mindestens ein zerspanendes Werkzeugteil mit schneidender (schneidenden) Fläche(n) aufweist und wobei wenigstens dessen schneidende Fläche(n) aus einem Hartstoff enthaltenden Verbundwerkstoff besteht.

Ein Honschleifwerkzeug der vorstehend angegebenen Art ist aus der EP-A2 0 692 342 bekannt. Dieses Honwerkzeug ist ringförmig ausgebildet, mit einer Außenverzahnung oder einer Innenverzahnung versehen. Das Material dieses ringförmigen Honschleifwerkzeugs bzw. Honrings besteht aus einer homogenen Mischung aus einem Kunstharz, wie zum Beispiel einem Expoxydharz, aus keramischen Feinkörnern mit einer Korngröße, die wesentlich kleiner ist als die Zahnhöhe der Außen- bzw. Innenverzahnung, und aus keramischen Grobkörnern, deren Abmessungen um mindestens eine Größenordnung größer ist als die Feinkorngröße, jedoch kleiner als die Zahnhöhe ist und insbesondere zwischen einem Viertel der Zahnhöhe bis zur vollen Zahnhöhe beträgt. In absoluten Werten angegeben sollen die Feinkörper eine Kantenlänge oder einen Durchmesser von weit unter 1 mm aufweisen, während die Grobkörner Kantenlängen bzw. Durchmesser von einigen Millimetern besitzen sollen. Als Werkstoff für die Grob- und Feinkörner wird Korund, vorzugsweise Sinterkorund, angegeben. Derartige Honschleifwerkzeuge haben sich im Einsatz bewährt. Problematisch ist allerdings, daß die eingesetzten Kunstharze nur einem begrenzten Temperaturbereich standhalten, d.h. unter hoher Temperatureinwirkung eine ausreichende Formstabilität nicht gewährleistet ist. Außerdern ist auch die Abtragsleistung begrenzt.

Die US-A-4,504,284 beschreibt einen Schneideinsatz, der einen Kern aus Kohlenstoff, einen Füller und Kohlenstoffasern aufweist, frei von Diamant und kubischen Bornitridkristallen. An den Ecken entlang der oberen oder der unteren Oberfläche des Kerns bzw. Körpers sind Diamant oder kubische Bornitridkristalle vorhanden, die an den Kern mit einer β-Siliziumkarbid- und Si-Matrix angebondet sind.

In der US-PS 4,353,953 werden unter anderem Schleifkörper beansprucht, die aus einem Grundkörper, der im wesentlichen aus Graphit gebildet ist, und einer Oberflächenschicht bestehen. Die Oberflächenschicht ist aus Diamant, kubischem Bomitrid oder einer Mischung aus diesen beiden gebildet, wobei diese Kristalle vor ihrem Aufbringen auf den Grundkörper mit einem Harz gebunden werden. Die Diamantkristalle können hierbei mit Kohlenstoff beschichtet sein und der Mischung können etwa 10% gebrochene Kohlenstoffgewebefasern (crushed carbon cloth) zugegeben werden. Darüberhinaus geht aus diesem Dokument hervor, daß die die Kristalle enthaltende äußere Schicht durch Infiltration von flüssigem Silizium unter Bildung von Siliziumkarbid und durch Silizium verfestigt wird.

Die EP-A2-0 692 342 beschreibt ein verzahntes Honschleifwerkzeug zur Feinbearbeitung von Präzisionszahnrädern, mit in einer Kunstharzmatrix eingebetteten keramischen Feinkörnern, deren Größe wesentlich kleiner ist als die Zahnhöhe. Bei diesem Honschleifwerkzeug sind, um im Abrollverfahren unter Abtrag von ein bis zwei Zehntel Millimetern eine Oberflächengüte zu erreichen, in der Kunstharzmatrix einliegende keramische Grobkörner vorgesehen mit einem größeren Abtragsvermögen als die Feinkörner und einer Abmessung zwischen einem Viertel Zahnhöhe bis voller Zahnhöhe, wobei der Gewichtsanteil des Grobkomes größer ist als der des Feinkornes.

Ausgehend von dem vorstehend angegebenen Stand der Technik und der Problematik, die mit der begrenzten Temperaturbeständigkeit solcher Schleifwerkzeuge zusammenhängt, liegt der vorliegenden Erfindung die Aufgabe zugrunde, ein Schleifhonwerkzeug derart auszubilden, daß es höhere Standzeiten gegenüber den Schleifhonwerkzeugen nach dem Stand der Technik aufweist, insbesondere auch für Einsätze unter hohen Temperaturen, die im Bereich der Bearbeitungsoberfläche auftreten, einsetzbar sind.

Diese Aufgabe wird, ausgehend von dem eingangs genannten Stand der Technik, dadurch gelöst, daß zur Bildung des Verbundwerkstoffes eine Vorform aus im wesentlichen kontinuierlichen Fasern aus Kohlenstoff gebildet und in diese Vorform ein flüssiges Metall infiltriert wird, das mit Kohlenstoff in situ Karbid bildet, daß zumindest die schneidene(n) Fläche(n) des Werkzeugteils aus diesem Verbundwerkstoff besteht (bestehen) und daß die im Oberflächenbereich der schneidenden Fläche(n) endenden Kohlenstoff-Fasern mit ihrer Achse so ausgerichtet sind, daß sie eine größere Richtungskomponente in Richtung der Flächennormalen im Oberflächenbereich der schneidenden Fläche(n) als senkrecht dazu aufweisen.

Das Grundkonzept des Werkzeugs besteht darin, daß zumindest die schneidende(n) Fläche(n) aus einem aus kontinuierlichen Fasem aufgebauten Fasergerüst gebildet wird, das die Grundstruktur darstellt, um darin eine Matrix zu binden, die die abrasiven Hartstoffe als eine wesentliche Komponente enthält. Diese Hartstoffe werden bevorzugt durch Flüssiginfiltration von Silizium in situ gebildet, d.h. es wird flüssiges Silizium in eine definiert gebildete, offene Porenstruktur des Kohlenstoff-gebundenen Fasergerüsts infiltriert. Mit dieser Vorgehensweise ist es nicht notwendig, beispielsweise Kunststoffe heranzuziehen, um die Hartstoffe, die für die abrasive Wirkung der Werkzeugoberfläche erforderlich sind, einzubetten. Das Gerüst aus Fasern aus Kohlenstoff hat zum einen den Vorteil, daß es den hohen Temperaturen standhält, die beim Infiltrieren des flüssigen Siliziums in die poröse Struktur auftreten und die in Bezug auf die in Frage kommenden Hartstoffe oberhalb 1400°C liegen, zum anderen kann aus diesem Fasergerüst eine Vorform gebildet werden, die, vor der Flüssiginfiltrierung des Metalls, annähernd der Endkontur des herzustellenden Werkzeugs, auch dann, wenn es komplizierte Oberflächenstrukturen besitzt, entspricht. Diese Struktur der Vorform aus Kohlenstoff-gebundenen Kohlenstoffasern bildet eine äußerst stabile Grundstruktur, die den Arbeitsbedingungen eines spanabhebenden Werkzeugs standhält, das allerdings im Bereich der Arbeitsoberfläche ausreichend Freiräume bietet, so daß die in der Matrix eingelagerten Hartstoffe mit ihren scharfkantigen, kristallinen Strukturen freiliegen, um den Abtrag an dem zu bearbeitenden Werkstück vorzunehmen. Während dieses Fasergerüst während der Herstellung die stabilisierende Komponente bildet, tritt deren Stabilität, im Vergleich zu den eingebetteten Hartstoffen, für den Materialabtrag in den Hintergrund, d.h. für den Abtrag an dem zu bearbeitenden Werkstoff. Dennoch zeigt das Fasergerüst eine positive Eigenschaft und Wirkung dahingehend, daß die Festigkeit und Steifigkeit sowie die Schadenstoleranz und Thermoschockbeständigkeit erhöht wird, und daß die an der Arbeitsoberfläche freiliegende Faserstruktur, d.h. die im Bereich der Oberfläche des Arbeitsbbereichs endenden kontinuierlichen Fasern, eine Bürstenwirkung zeigt, indem die Faserenden über die bearbeitete Oberfläche streifen und dadurch zu einem gewissen Anteil am Materialabtrag beitragen. Diese definiert gerichtete Struktur der Fasern mit der vorstehend angezeigten Wirkung ist insbesondere dadurch gegeben, daß die Endlosfasern definiert in dem Fasergerüst orientiert werden können.

Im Hinblick auf die vorstehend erwähnte Bürstenwirkung des Fasergerüsts sind bevorzugt die im Oberflächenbereich der schneidenden Fläche(n) endenden Fasern des Werkzeugs mit ihrer Achse so ausgerichtet, daß sie eine größere Richtungskomponente in Richtung der Flächennormalen im Oberflächenbereich der schneidenden Fläche(n) als senkrecht dazu aufweisen. Dies bedeutet, daß die Fasern borstenartig in Bezug auf die Oberfläche enden, im Gegensatz zu einem parallelen Verlauf dazu, wodurch auch neben der Bürstenwirkung die freie Fläche zwischen den Fasern einen großen Anteil ausmacht, der mit den kristallinen Hartstoffen ausgefüllt wird.

In Bezug auf das Fasergerüst aus Kohlenstoffasern ergeben sich besondere Vorteile. Diese Vorteile ergeben sich daraus, daß zum einen Kohlenstoffasern leicht zu einem Fasergerüst im unbehandelten Zustand formbar sind, beispielsweise in Form von Geweben, zum anderen ein solches Kohlenstoffasergerüst nach Imprägnieren mit einem Kohlenstoff-haltigen Polymer unter Temperaturbehandlung zu einem formstabilen Vorkörper verfestigbar ist. Weiterhin können die Kohlenstoffasern teilweise dazu genutzt werden, mit dem infiltrierten, flüssigen Silizium Karbide zu bilden. Solche Siliziumkarbide sind die bevorzugten Hartstoffe, um den abrasiven Abtrag zu erzielen. Ein Teil des Hartstoffs sollte in Form von kristallinem Siliziumkarbid vorliegen. Kristallines Siliziumkarbid zeigt sehr scharfkantige Kristallstrukturen, die für einen optimalen Abtrag der zu bearbeitenden Materialien förderlich ist. Die Korngröße des kristallinen Karbids sollte 5 bis 100 µm, vorzugsweise größer als 10 µm, betragen. Es hat sich gezeigt, daß dann, falls die Korngröße zu niedrig eingestellt wird, für Hochleistungsbearbeitung die Abtragsleistung relativ gering ist, während bei einer Korngröße oberhalb von 10 µm der Effekt erzielt wird, daß die sich jeweils neu bildenden Schneiden durch Abbrechen von Körnern die Schneidleistung beträchtlich steigern.

Das kristalline Karbid besteht aus Siliziumkarbid. Silizium eignet sich insbesondere für die angesprochene Flüssiginfiltration, da sein Schmelzpunkt relativ niedrig, d.h. nämlich bei 1410°C, liegt. Silizium ist nicht nur aufgrund seines niedrigen Schmelzpunktes zu bevorzugen, sondern auch unter dem Gesichtspunkt, daß sich gerade dann, wenn Kohlenstoffasem für das Fasergerüst eingesetzt werden, Teile des Siliziums mit Kohlenstoffasern Siliziumkarbid bilden, so daß ein hoher Anteil an Hartstoffen in dem Verbundkörper erzielbar ist.

Der Faservolumengehalt in Bezug auf eine Volumeneinheit des Verbundwerkstoffs wird auf 20 bis 70%, vorzugsweise über 50%, eingestellt. Ein hoher Faseranteil pro Volumeneinheit, vorzugsweise in dem Bereich von 50% bis 70%, hat den Vorteil, daß ein dichter Werkstoff mit guter Einbettung der Hartstoffe entsteht, was zu hoher Korngrenzfestigkeit führt.

Der Verbundwerkstoff kann in seinen abrasiven Eigenschaften definiert eingestelt werden, indem in die Matrix des Verbundwerkstoffs Füllstoffe in Form von pulverförmigen Hartstoffen und/oder pulverförmigem Kohlenstoff eingebracht wird. Pulverförmiger Kohlenstoff sollte in einem definiert eingestellten Anteil in die Matrix eingebracht werden, um Siliziumkarbid als Hartstoff zu bilden, d.h. es wird in ausreichendem Maße Kohlenstoff bereitgestellt, der sich mit dem über Flüssiginfiltration eingebrachten Silizium zu Siliziumkarbid reagiert. Es können aber auch definiert pulverförmige Hartstoffe in vorgegebenen Korngrößen eingebracht werden, die in der Matrix definiert verteilt werden. Hierdurch läßt sich der Siliziumkarbid-Gehalt, der Kohlenstoff-Gehalt oder der Gehalt an anderen Hartstoffen des Verbundwerkstoffs gezielt erhöhen und damit auch die spanabhebende Abtragsleistung des Werkzeugs. Füllstoffe, die so in die Matrix eingebracht werden, sollten eine Korngröße im Bereich von 1 µm bis 100 µm aufweisen; in diesem Korngrößenbereich werden gute abrasive Eigenschaften erreicht.

Falls Kohlenstoffe als Füllstoffe in die Matrix eingebracht werden, sollte der Kohlenstoff in Form von amorphem Kohlenstoff vorliegen. Amorpher Kohlenstoff hat den Vorzug, da er eine größere abrasive Wirkung im Vergleich zu graphitischem Kohlenstoff besitzt; außerdem wird die Karbid-Bildung mit Silizium gefördert.

Wie bereits vorstehend angeführt ist, wird als Siliziumkarbid eingesetzt, das durch Flüssiginfiltration von Silizium in eine Porenstruktur um das Fasergerüst unter Reaktion mit Kohlenstoff gebildet ist. Hierbei sollte der Volumenanteil der gefüllten Porenstruktur im Bereich zwischen 5% und 50%, vorzugsweise zwischen 15% und 30%, und zwar bezogen auf das Volumen des Verbundwerkstoffs, betragen. Der Bereich zwischen 15% und 30% ist zu bevorzugen, da dann die Restmenge an freiem Silizium begrenzt ist, eine hohe Kapillarwirkung gegeben ist, die eine schnelle Infiltration zur Folge hat, und außerdem die Reaktion mit den Fasern akzeptabel niedrig ist..

Für das Fasergerüst aus Kohlenstoffasern können alle kontinuierlichen Kohlenstoffasern verwendet werden, jedoch sollten vorzugsweise Fasern eingesetzt werden, die durch ein Zug-E-Modul im Bereich von 200 GPa bis 300 GPa gekennzeichnet sind. Derartige Fasern weisen eine genügend hohe thermische Stabilität auf, sowohl während der Herstellung des Verbundwerkstoffs unter Wärmeeinwirkung als auch während des Einsatzes des Werkzeugs zur spanabhebenden Bearbeitung. Außerdem wurden für diese Kohienstoffasern die höchsten Faser-Keramik-Festigkeiten des Verbundwerkstoffs erzielt.

Nachfolgend werden Ausführungsbeispiele von erfindungsgemäß aufgebauten Honschleifwerkzeugen anhand der Zeichnungen beschrieben. In den Zeichnungen zeigt
- Figur 1: eine perspektive Ansicht eines Honschleifrings mit Innenverzahnung,
- Figur 2: eine perspektive Ansicht eines Honschleifrings mit Außenverzahnung.

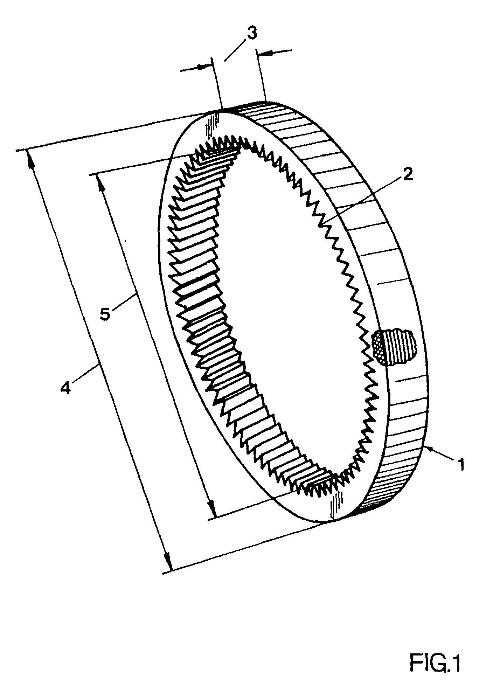

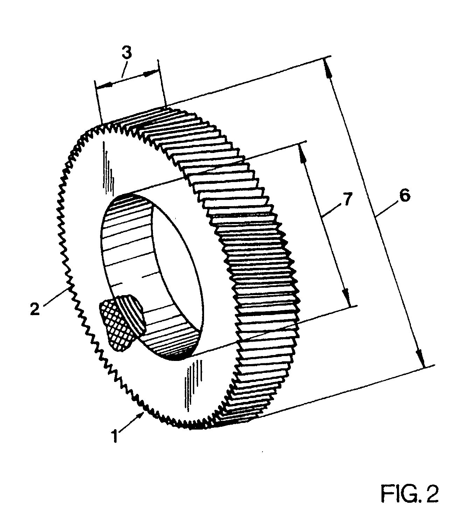

Um erfindungsgemäße Werkzeuge zur spanabhebenden Bearbeitung von Werkstücken herzustellen, wie sie in den Figuren 1 und 2 dargestellt sind, sind die nachfolgenden Verfahrensschritte anzuwenden.

Um einen Honschleifring 1 herzustellen, wie er in Figur 1 oder Figur 2 dargestellt ist, wird eine der Form des Honschleifrings 1 entsprechende Form bereitgestellt. In dieser Form wird dann ein Fasergerüst aus Kohlenstoffasern aufgebaut. Dieses Gerüst sollte eine definierte, zwei- oder dreidimensionale Struktur aufweisen, beispielsweise in Form von Geweben, wobei darauf zu achten ist, daß kontinuierliche Fasern verwendet werden. Die einzelnen Faserlagen werden in quasi isotropem Aufbau übereinander gestapelt derart, daß die einzelnen Fasern definiert zu den Oberflächen der schneidenden Flächen 2 der Innen- bzw. Außenzähne der Verzahnung ausgerichtet sind. Dies bedeutet, daß ein hoher Anteil an Fasern im wesentlichen in Richtung der auf der Oberfläche einer schneidenden Fläche stehenden Normalen enden sollten, so daß sie bürstenartig zu der späteren Schleifoberfläche ausgerichtet sind. Dieses Fasergerüst wird dann in einem Verfahrensschritt mit kohlenstoffreichen Polymeren, die auch als Precursoren bezeichnet werden, getränkt. Eine solche Tränkung der einzelnen Fasern kann auch vor dem Aufbau des Fasergerüsts erfolgen, indem entweder die einzelnen Fasern getränkt werden oder die einzelnen Faserlagen in Form des Gewebes. Diese Tränkung kann durch Harzinjektion, Wickeloder Prepregtechnik erfolgen. Der Kohlenstoffgehalt des Polymers sollte vorzugsweise > 30% bezogen auf die Masse nach der Pyrolyse, auf die nachfolgend noch Bezug genommen wird, betragen; dieser hohe Kohlenstoffgehalt wird, wie nachfolgend noch ersichtlich werden wird, dazu genutzt, daß sich die erforderlichen Karbide bilden. Diesem Polymer, das zur Beschichtung, Tränkung und Einbettung (Matrix) der Fasern verwendet wird, können weitere Füllstoffe zugesetzt werden, wobei diese Füllstoffe im wesentlichen, neben Kohlenstoff. aus Hartstoffen bestehen sollten. Diese Hartstoffe sollten auf diejenigen abgestimmt sein, die die spanabhebende Wirkung hervorrufen. Es sollte darauf geachtet werden, daß die Korngröße dieser pulverförmigen Füllstoffe eine geeignete Korngröße besitzt, die im Bereich von 1 µm bis 100 µm liegen sollte. Diese Füllstoffe können vor der Tränkung des Fasergerüsts dem Polymer zugemischt werden, so daß eine Polymersuspension zur Tränkung bereitgestellt wird. In Bezug auf das Volumen dieser Suspension sollte der Füllstoffanteil < 30 Volumen-% betragen. Die Polymersuspension kann in den Faserkörper injiziert werden, wobei Injektionsdrücke von 5 bar bei einer Temperatur von etwa 200°C geeignet sind.

Der so erzeugte Körper wird nach der Aushärtung, bevorzugt unter Zufuhr eines Schutzgases, wie Stickstoff, drucklos bei einer Temperatur von etwa 900°C unterworfen. Aufgrund dieser Pyrolyse erfolgt eine Umwandlung der Polymermatrix in amorphen Kohlenstoff. Gleichzeitig bildet sich, aufgrund einer Volumenschrumpfung eine Mikrorißstruktur um das Fasergerüst herum, mit einer offenen Porosität, die geeignet durch die Menge und Art der injizierten Polymersuspension eingestellt werden kann. Die nun vorliegende Vorform mit der definierten Mikrorißstruktur ist im wesentlichen formstabil und entspricht den äußeren Abmessungen des herzustellenden Schleifrings 1, wie er in den Figuren 1 und 2 gezeigt ist.

In einem weiteren Verfahrensschritt wird in diese Vorform nun flüssiges Silizium infiltriert. Für diese Infiltration wird eine Temperatur von etwa 1650°C eingestellt, d.h. diese Infiltrationstemperatur liegt oberhalb des Schmelzpunktes von Silizium, der 1410°C beträgt. Unter Anlegung eines geeigneten Vakuums während der Infiltration kann die Infiltration kontrolliert werden, so daß eine sehr rasche Füllung der Poren möglich ist. Das flüssige, infiltrierte Silizium reagiert mit Kohlenstoff, der aufgrund des pyrolisierten Harzes oder aber durch Einbringen als Füllstoff in das Harz bzw. Polymer vorliegt, zu Siliziumkarbid, was einen geeigneten Hartstoff zum Erzielen der erwünschten abrasiven Eigenschaften des Honwerkzeugs darstellt. Das in situ gebildete Siliziumkarbid zeigt eine ausgeprägte, kristalline Struktur. Die Temperaturerhöhung auf 1650°C, also oberhalb des Schmelzpunktes von Silizium, während der Infiltration ist im Hinblick auf ein Kornwachstum förderlich, da sich herausgestellt hat, daß die Hartstoffkörnung nicht zu klein sein darf, damit ein definiertes Ausbrechen gewährleistet ist, um die Schleifoberfläche während des Einsatzes des Werkzeugs durch ausbrechende Hartstoffkörner zu erneuern.

Nach einer Haltedauer von 2 Stunden bei einer Temperatur von 1650°C wird ein Verbundwerkstoff erhalten, der etwa: 60 Gew.-% Fasern und in der Matrix 5 Gew.-% Kohlenstoff, 30 Gew.-% Siliziumkarbid und 5 Gew.-% Silizium aufweist. Die Korngröße des Siliziumkarbids liegt im Bereich von 5 µm bis 20 µm. Sie läßt sich durch eine thermische Nachbehandlung bei etwa 2000°C auf eine Korngröße bis etwa 50 µm steigern.

Für die Schleifhonringe 1 mit Innen- oder Außenverzahnung gemäß der Figur 1 und 2 werden bevorzugt sogenannte Leinwandgewebe eingesetzt, die kontinuierliche Fasern mit einer Orientierung in zwei aufeinander senkrecht stehenden Richtungen haben. Ein typisches Flächengewicht solcher Fasergewebe liegt bei 245 g/m². Damit im Bereich der Schneiden bzw. der Verzahnung 2 ein relativ hoher Anteil der Fasern in Richtung der Flächennormalen der schneidenden Flächen verläuft, werden die Fasern als Gewebebänder, deren Breite der Wandstärke des Honschleifrings entspricht, d.h. der Hälfte der Differenz zwischen den Durchmessern 4 und 5 bzw. 6 und 7, in Umfangsrichtung abgelegt und axial verpreßt. Die Figuren 1 und 2 zeigen den wickelartigen Aufbau der Gewebelagen in Axialrichtung. Wie an den aufgebrochenen Stellen der beiden Figuren zu sehen ist, können im Bereich der nicht verzahnten Außenseite (Schleifhonring mit Innenverzahnung, Figur 1) oder der Innenoberfläche (Schleifhonring mit Außenverzahnung, Figur 2) die Lagen in Umfangsrichtung gelegt werden, um eine möglichst hohe Abtragsleistung durch die Faserorientierung und um eine zusätzliche Stabilisierung an der jeweils glatten Oberfläche, die als Aufnahmefläche zur Halterung des Honschleifwerkzeugs dient, zu erzielen.

Typischerweise werden solche Honschleifringe mit einer Dicke, in den Figuren mit dem Bezugszeichen 3 bezeichnet, von 10 bis 80 mm aufgebaut; der Außendurchmesser 4 des Honschleifwerkzeugs der Figur 1 beträgt typischerweise 270 bis 400 mm, während der Innendurchmesser 5 typischerweise 120 bis 350 mm beträgt. Typische Dimensionierungen für das Honschleifwerkzeug mit Außenverzahnung sind ein Außendurchmesser 6 von 100 bis 250 mm und ein Innendurchmesser 7 von 50 - 150 mm. Natürlich sind die Durchmesser solcher Honschleifwerkzeuge von dem zu bearbeitenden Werkstück abhängig.

Als Beispiel beträgt der Fasergehalt des Schleifhonwerkzeugs etwa 60 Gewichts-%; der Siliziumkarbidgehalt beträgt etwa 30 Gewichts-% und der Kohlenstoffanteil etwa 5 Gewichts-%. Der Anteil an Silizium in dem fertiggestellten Honschleifwerkzeug beträgt typischerweise 5 Gewichts-%.

Die exakte Endkontur der Verzahnung wird mittels Erodierverfahren hergestellt oder durch Schleifen mittels diamant-besetzten Profil-Schleifscheiben.

Durch die erfindungsgemäße Ausbildung des Honschleifwerkzeugs sind in Bezug auf herstellbare Dimensionen keine Einschränkungen gegeben, da auch bei größeren Durchmessern oder Materialanhäufungen eine ausreichende Festigkeit durch das Kohlenstoffasergerüst gewährleistet ist.

## Patentansprüche

1. Honschleifwerkzeug zur spanabhebenden Bearbeitung, wie zum Schleifen, Polieren oder Honen, von Werkstücken, insbesondere zur Bearbeitung von Werkstücken aus Metall, das mindestens ein zerspanendes Werkzeugteil mit schneidender (schneidenden) Fläche(n) aufweist und wobei wenigstens dessen schneidende(n) Fläche(n) aus einem Hartstoff enthaltenden Verbundwerkstoff besteht, **dadurch gekennzeichnet, daß** zur Bildung des Verbundwerkstoffes eine Vorform aus im wesentlichen kontinuierlichen Fasern aus Kohlenstoff gebildet und in diese Vorform ein flüssiges Metall infiltriert wird, das mit Kohlenstoff in situ Karbid bildet, daß zumindest die schneidene(n) Fläche(n) des Werkzeugteils aus diesem Verbundwerkstoff besteht (bestehen) und daß die im Oberflächenbereich der schneidenden Fläche(n) endenden Kohlenstoff-Fasern mit ihrer Achse so ausgerichtet sind, daß sie eine größere Richtungskomponente in Richtung der Flächennormalen im Oberflächenbereich der schneidenden Fläche(n) als senkrecht dazu aufweisen.

2. Honschleifwerkzeug nach Anspruch 1, **dadurch gekennzeichnet, daß** das Fasergerüst in Form eines Gewebes gebildet ist.

3. Honschleifwerkzeug nach Anspruch 1, **dadurch gekennzeichnet, daß** wenigstens ein Teil des Hartstoffs in Form von kristallinem Siliziumkarbid vorliegt.

4. Honschleifwerkzeug nach Anspruch 3, **dadurch gekennzeichnet, daß** die Korngröße des kristallinen Siliziumkarbids zwischen 5 und 100 µm, vorzugsweise größer 10 µm, beträgt.

5. Honschleifwerkzeug nach Anspruch 1, **dadurch gekennzeichnet, daß** die Matrix einen Rest an nicht reagiertem Silizium enthält, wobei dessen Anteil weniger als 10 Gewichts-% vom gesamten Verbundwerkstoff beträgt.

6. Honschleifwerkzeug nach einem der Ansprüche 1 bis 5, **dadurch gekennzeichnet, daß** der Faservolumengehalt zwischen 20 und 70%, vorzugsweise 50%, bezogen auf eine Volumeneinheit des Verbundwerkstoffs beträgt.

7. Honschleifwerkzeug nach einem der Ansprüche 1 bis 6, **dadurch gekennzeichnet, daß** der Verbundwerkstoff Füllstoffe in Form von pulverförmigen Hartstoffen und/oder pulverförmigem Kohlenstoff enthält.

8. Honschleifwerkzeug nach Anspruch 7, **dadurch gekennzeichnet, daß** die Füllstoffe eine Korngröße im Bereich von 1 µm bis 100 µm aufweisen.

9. Honschleifwerkzeug nach Anspruch 8, **dadurch gekennzeichnet, daß** der Gehalt an Füllstoffen weniger als 50 Volumen-% der Matrix beträgt.

10. Honschleifwerkzeug nach Anspruch 7, **dadurch gekennzeichnet, daß** der Kohlenstoff in Form von amorphem Kohlenstoff vorliegt.

11. Honschleifwerkzeug nach einem der Ansprüche 7 oder 9, **dadurch gekennzeichnet, daß** jede Füllstoffkomponente jeweils in einer Menge von weniger als 10 Volumen-% des Verbundwerkstoffs vorliegt.

12. Honschleifwerkzeug nach Anspruch 1, **dadurch gekennzeichnet, daß** der Volumenanteil der gefüllten Porenstruktur des Fasergerüsts im Bereich zwischen 5% und 50%, vorzugsweise zwischen 15% und 30%, bezogen auf das Volumen des Verbundwerkstoffs beträgt.

13. Honschleifwerkzeug nach Anspruch 1, **dadurch gekennzeichnet, daß** die Kohlenstoffasern ein Zug-E-Modul im Bereich zwischen 200 GPa und 300 GPa haben.

14. Honschleifwerkzeug nach Anspruch 1 und/oder Ansprüche 7, **dadurch gekennzeichnet, daß** der Volumenanteil der Hartstoffe am Verbundwerkstoff 10% bis 50% beträgt.

15. Honschleifwerkzeug nach einem der Ansprüche 1 bis 14, **dadurch gekennzeichnet, daß** es ringförmig mit einer Außen- oder Innenverzahnung ausgebildet ist, wobei die Zähne der Verzahnung die schneidenden Flächen bilden.

## Claims

1. A honing tool for machining, e.g. grinding, polishing or honing, workpieces, in particular for machining workpieces of metal, comprising at least one machining tool part with cutting surface(s), and at least the cutting surface(s) thereof consisting of a composite material containing a hard material, **characterized in that** a preform is formed from substantially continuous fibers of carbon for forming the composite material and a liquid metal which with carbon forms carbide in situ is infiltrated into said preform, that at least the cutting surface(s) of the tool part consist(s) of said composite material and that the carbon fibers ending in the surface area of the cutting surface(s) are oriented with their axis such that they have a larger directional component in the direction of the normal to the surface in the surface area of the cutting surface(s) than in a direction perpendicular thereto.

2. The honing tool according to claim 1, **characterized in that** the fiber skeleton is configured in the form of a cloth.

3. The honing tool according to claim 1, **characterized in that** at least part of the hard material is present in the form of crystalline silicon carbide.

4. The honing tool according to claim 3, **characterized in that** the grain size of the crystalline silicon carbide is between 5 and 100 µm, preferably greater than 10 µm.

5. The honing tool according to claim 1, **characterized in that** the matrix contains a residue of non-reacted silicon, the amount thereof being less than 10% by wt. of the total composite material.

6. The honing tool according to any one of claims 1 to 5, **characterized in that** the fiber volume content is between 20% and 70%, preferably 50%, based on a volume unit of the composite material.

7. The honing tool according to any one of claims 1 to 6, **characterized in that** the composite material contains fillers in the form of powder-like hard materials and/or powder-like carbon.

8. The honing tool according to claim 7, **characterized in that** the fillers have a grain size ranging from 1 µm to 100 µm.

9. The honing tool according to claim 8, **characterized in that** the content of fillers is less than 50% by volume of the matrix.

10. The honing tool according to claim 7, **characterized in that** the carbon is present in the form of amorphous carbon.

11. The honing tool according to any one of claims 7 or 9, **characterized in that** each filler component is present in an amount of less than 10% by volume of the composite material.

12. The honing tool according to claim 1, **characterized in that** the volume amount of the filled pore structure of the fiber skeleton ranges from 5% to 50%, preferably from 15% to 30%, based on the volume of the composite material.

13. The honing tool according to claim 1, **characterized in that** the carbon fibers have a modulus of elasticity in extension ranging from 200 GPa to 300 GPa.

14. The honing tool according to claim 1 and/or claim 7, **characterized in that** the volume amount of the hard materials in the composite material is 10% to 50%.

15. The honing tool according to any one of claims 1 to 14, **characterized in that** it is ring-shaped with an external or internal toothing, the teeth of the toothing forming the cutting surfaces.

## Revendications

1. Outil de honing pour l'usinage par enlèvement de matière, comme le meulage, le polissage ou le rodage, de pièces à oeuvrer, en particulier pour l'usinage de pièces en métal, qui comprend au moins une partie d'outil de formage de copeaux avec une ou plusieurs surface(s) de coupe et dont au moins ladite ou lesdites surface(s) de coupe est/sont réalisée(s) en matériau composite comprenant une substance dure, **caractérisé en ce que** pour former le matériau composite on constitue une ébauche à partir de fibres de carbone essentiellement continues et l'on infiltre un métal liquide dans cette ébauche, lequel forme avec in situ du carbure avec le carbone, **en ce que** ladite ou lesdites surface(s) de coupe au moins de la partie d'outil est/sont constituée(s) avec ce matériau composite, et **en ce que** les fibres de carbone qui se terminent dans la région de surface de la ou des surface(s) de coupe sont ainsi orientées avec leurs axes qu'elles présentent une composante directionnelle plus importante en direction de la normale à la surface dans la région de la ou des surface(s) de coupe que perpendiculairement à cette normale.

2. Outil de honing selon la revendication 1, **caractérisé en ce que** la structure des fibres est réalisée sous la forme d'un tissu.

3. Outil de honing selon la revendication 1, **caractérisé en ce qu'**une partie au moins de la substance dure se présente sous la forme de carbure de silicium cristallin.

4. Outil de honing selon la revendication 3, **caractérisé en ce que** la taille des grains du carbure de silicium cristallin est comprise entre 5 et 100 microns, et de préférence supérieure à 10 microns.

5. Outil de honing selon la revendication 1, **caractérisé en ce que** la matrice contient un reste de silicium qui n'a pas réagi, dont la proportion s'élève à moins de 10 % en poids de la totalité du matériau composite.

6. Outil de honing selon l'une des revendications 1 à 5, **caractérisé en ce que** la teneur volumétrique des fibres est comprise entre 20 et 70 %, et s'élève de préférence à 50 %, rapportée à une unité de volume du matériau composite.

7. Outil de honing selon l'une des revendications 1 à 6, **caractérisé en ce que** le matériau composite contient des matières de remplissage sous la forme de matières dures en forme de poudre et/ou du carbone en forme de poudre.

8. Outil de honing selon la revendication 7, **caractérisé en ce que** les matières de remplissage ont une taille de grain dans la plage de 1 à 100 microns.

9. Outil de honing selon la revendication 8, **caractérisé en ce que** la teneur en matières de remplissage est inférieure à 50 % en volume de la matrice.

10. Outil de honing selon la revendication 7, **caractérisé en ce que** le carbone se présente sous la forme de carbone amorphe.

11. Outil de honing selon la revendication 1, **caractérisé en ce que** chaque composante de matières de remplissage se présente respectivement sous une quantité inférieure à 10 % en volume du matériau composite.

12. Outil de honing selon la revendication 1, **caractérisé en ce que** la proportion volumétrique de la structure poreuse remplie de la structure en fibres est comprise dans la plage entre 5 et 50 %, de préférence entre 15 et 30 %, rapportée au volume du matériau composite.

13. Outil de honing selon la revendication 1, **caractérisé en ce que** les fibres de carbone ont un module d'élasticité en traction dans la plage entre 200 GPa et 300 GPa.

14. Outil de honing selon la revendication 1 et/ou la revendication 7, **caractérisé en ce que** la proportion volumétrique des matières dures dans le matériau composite est de 10 à 50 %.

15. Outil de honing selon l'une des revendications 1 à 14, **caractérisé en ce qu'**il est réalisé sous forme annulaire avec une denture extérieure ou une denture intérieure, les dents de ladite denture formant les surfaces de coupe.
